# EUROPÄISCHE PATENTANMELDUNG

(11) **EP 3 398 904 A1**
(43) Veröffentlichungstag der Anmeldung: **07.11.2018**
(21) Anmeldenummer: 18164847.8
(22) Anmeldetag: 29.03.2018
(51) Int. Cl.: B66F 9/075, B66F 17/00, G01L 5/00

(54) **FLURFÖRDERZEUG MIT MINDESTENS EINEM LASTRAD**

(30) Priorität: 18.04.2017 DE 102017108156
(71) Anmelder: Linde Material Handling GmbH, 63743 Aschaffenburg (DE)
(72) Erfinder: SCHUCK, Johannes, 63840 Hausen (DE)
(74) Vertreter: Patentship Patentanwaltsgesellschaft mbH

(57) **Zusammenfassung**

Die Erfindung betrifft ein Flurförderzeug (1) mit mindestens einem Lastrad (13), mit der sich das Flurförderzeug (1) auf einer Fahrbahn abstützt, wobei das Lastrad (13) auf einem Lagerzapfen (15) drehbar gelagert ist, der an einem Fahrzeugrahmen (3) des Flurförderzeugs (1) befestigt ist, wobei eine Sensoreinrichtung (20) zur Radlastmessung des Lastrades (13) vorgesehen ist. Die Sensoreinrichtung (20) umfasst einen Sensor (21) zur Erfassung der Verformung eines elastischen Messelements (22). Das elastische Messelement (22) ist in einer Ausnehmung (23) des Lagerzapfens (15) angeordnet und der Sensor (21) ist an dem elastischen Messelement (22) angeordnet.

## Beschreibung

Die Erfindung betrifft ein Flurförderzeug mit mindestens einem Lastrad, mit der sich das Flurförderzeug auf einer Fahrbahn abstützt, wobei das Lastrad auf einem Lagerzapfen drehbar gelagert ist, der an einem Fahrzeugrahmen des Flurförderzeugs befestigt ist, wobei eine Sensoreinrichtung zur Radlastmessung des Lastrades vorgesehen ist.

Bei Flurförderzeugen mit mindestens einem Lastrad, mit der sich das Flurförderzeug auf einer Fahrbahn abstützt, wobei das Lastrad auf einem Lagerzapfen drehbar gelagert ist, der an einem Fahrzeugrahmen des Flurförderzeugs befestigt ist, ist es bekannt, eine Sensoreinrichtung zur Radlastmessung des Lastrades vorzusehen. Die Sensoreinrichtung kann hierbei einen direkt an dem Lagerzapfen angebrachten Sensor aufweisen, um die Verformungen bzw. Dehnungen des Lagerzapfens bzw. die auf den Lagerzapfen wirkenden Kräfte zu messen und hieraus die Radlast an dem Lastrad zu bestimmen.

Sofern der mit der Sensor versehene Lagerzapfen bei der Herstellung des Flurförderzeugs an dem Fahrzeugrahmen angeschweißt wird, besteht das Problem, dass der Sensor hohen Temperaturen ausgesetzt ist, die beim Anschweißen des Lagerzapfens an dem Fahrzeugrahmen auftreten.

Der vorliegenden Erfindung liegt die Aufgabe zugrunde, ein Flurförderzeug der eingangs genannten Gattung zur Verfügung zu stellen, bei dem das Problem, dass der Sensor hohen Temperaturen ausgesetzt ist, die beim Anschweißen des Lagerzapfens an dem Fahrzeugrahmen auftreten, vermieden wird.

Diese Aufgabe wird erfindungsgemäß dadurch gelöst, dass die Sensoreinrichtung einen Sensor zur Erfassung der Verformung eines elastischen Messelements umfasst, wobei das elastische Messelement in einer Ausnehmung des Lagerzapfens angeordnet ist und der Sensor an dem elastischen Messelement angeordnet ist. Die erfindungsgemäße Sensoreinrichtung umfasst somit ein mit einem Sensor versehenes elastisches Messelement, das als separates Bauteil ausgebildet ist und in einer Ausnehmung des Lagerzapfens angeordnet ist. Das elastische Messelement erfasst die Verformung des Lagerzapfens, die aus der Radlast an dem Lastrad resultiert. Dies ermöglicht es, den Lagerzapfen an dem Fahrzeugrahmen anzuschweißen und erst anschließend das mit einem Sensor versehene elastische Messelement in der Ausnehmung des Lagerzapfens anzuordnen, so dass der Sensor nicht den Temperaturen ausgesetzt, die beim Anschweißen des Lagerzapfens an dem Fahrzeugrahmen auftreten.

Gemäß einer vorteilhaften Ausgestaltungsform der Erfindung ist das elastische Messelement an einem ersten Ende an dem Fahrzeugrahmen des Flurförderzeugs befestigt und im Bereich des zweiten Endes an dem Lagerzapfen abgestützt. Dies ermöglicht es, dass mit dem elastischen Messelement die aus der auftretenden Radlast des Lastrades resultierende Verformungen des Lagerzapfens erfasst werden können, so dass mit dem an dem elastischen Messelement angeordneten Sensor die Radlast des Lastrades direkt an bzw. in dem Lagerzapfen erfasst werden kann.

Die Ausnehmung des Lagerzapfens ist gemäß einer vorteilhaften Ausgestaltungsform der Erfindung als Längsausnehmung des Lagerzapfens ausgebildet, in der das elastische Messelement angeordnet ist. Eine Längsausnehmung kann in dem Lagerzapfen auf einfache Weise hergestellt werden.

Gemäß einer vorteilhaften Ausgestaltungsform der Erfindung ist zur Abstützung des elastischen Messelements an dem Lagerzapfen ein Auflagerbolzen vorgesehen, der an dem Lagerzapfen befestigt ist. Dies ermöglicht es auf einfache Weise, das in der Ausnehmung des Lagerzapfens angeordnete elastische Messelement an dem zweiten Ende an dem Lagerzapfen abzustützen, um mit dem elastischen Messelement die aus der auftretenden Radlast des Lastrades hervorgerufenen Verformungen des Lagerzapfens zu erfassen.

Gemäß einer vorteilhaften Ausgestaltungsform der Erfindung ist das elastische Messelement zur Befestigung an dem Fahrzeugrahmen mit einem Befestigungsflansch versehen. Dies ermöglicht es auf einfache Weise, das in der Ausnehmung des Lagerzapfens angeordnete elastische Messelement an dem ersten Ende an dem Fahrzeugrahmen zu befestigen.

Gemäß einer vorteilhaften Ausgestaltungsform der Erfindung ist das elastische Messelement als Biegebalken ausgebildet. Mit einem Biegebalken können die Verformungen des Lagerzapfens auf einfache Weise erfasst werden, so dass mit dem Sensor die an dem Biegebalken auftretenden Verformungen bzw. Kräfte erfasst und hieraus die Radlast des Lastrades bestimmt werden kann.

Der Sensor ist vorteilhafterweise als Dehnungsmessstreifen ausgebildet. Durch die Vermeidung von hohen Temperaturen kann ein Dehnungsmessstreifen als Sensor verwendet werden, um die Radlast an dem Lastrad zu messen.

Der Sensor führt gemäß einer vorteilhaften Ausgestaltungsform der Erfindung eine Schubmessung und/oder eine Biegemessung des elastischen Messelements durch. Hierdurch kann auf einfache Weise mit dem an dem elastischen Messelement angeordneten Sensor die Radlast an dem Lastrad gemessen werden.

Besondere Vorteile ergeben sich, wenn gemäß einer bevorzugten Ausgestaltungsform der Erfindung der Lagerzapfen des Lastrades an dem Fahrzeugrahmen angeschweißt wird und das mit dem Sensor versehene elastische Messelement nach dem Schweißvorgang des Lagerzapfens an dem Fahrzeugrahmen an dem Lagerzapfen angebracht wird. Dadurch wird vermieden, dass der Sensor den beim Schweißvorgang des Lagerzapfens an dem Fahrzeugrahmen auftretenden hohen Temperaturen ausgesetzt wird und es wird nach dem Einbau des elastischen Messelements in den Lagerzapfen eine direkte Messung der Radlast des Lastrades an dem Lagerzapfen ermöglicht.

Das Flurförderzeug ist gemäß einer vorteilhaften Ausgestaltungsform der Erfindung als Schubmaststapler ausgebildet. Bei als Schubmaststaplern ausgebildeten Flurförderzeugen kann sich bei einer Kurvenfahrt die Radlast an den Lasträdern verringern, was zu einem seitlichen Kippen des Schubmaststaplers führen kann. Mit der erfindungsgemäßen Sensoreinrichtung kann eine derartige Verringerung der Radlast an den Lasträdern frühzeitig erfasst werden und entsprechende Gegenmaßnahmen durchgeführt werden, um eine seitliches Kippen des Schubmaststaplers zu vermeiden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer Seitenansicht,
- Figur 2: einen Schnitt gemäß Linie A-A der Figur 2 und
- Figur 3: ein elastischen Messelement des erfindungsgemäßen Flurförderzeugs in einer perspektivische Darstellung.

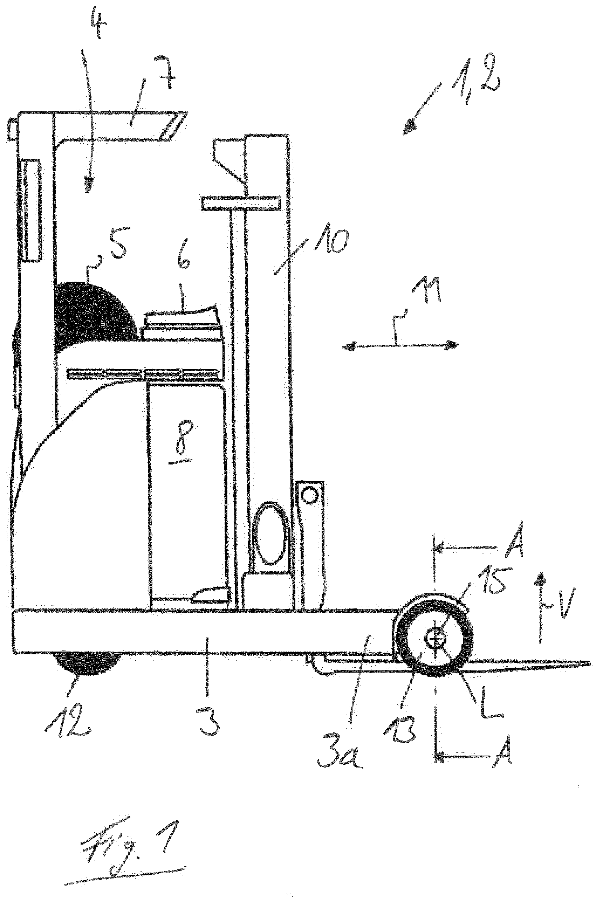

In Figur 1 ist ein erfindungsgemäßes Flurförderzeug 1 dargestellt. Das Flurförderzeug 1 ist im dargestellten Ausführungsbeispiel als Schubmaststapler 2 ausgeführt.

Das Flurförderzeug 1 weist einen Fahrzeugrahmen 3 auf.

Auf dem Fahrzeugrahmen 3 ist ein Fahrerstand 4 angeordnet. Der Fahrerstand 4 umfasst einen Fahrersitz 5, eine Bedienkonsole 6 sowie ein Fahrerschutzdach 7. Auf dem Fahrzeugrahmen 3 ist weiter ein Batterieblock 8 angeordnet, der die zum Betrieb des Flurförderzeugs 1 erforderliche elektrische Energie liefert.

Ein Hubgerüst 10 des Flurförderzeugs 1 kann relativ zum Fahrzeugrahmen 3 in Hauptfahrrichtung 11 des Schubmaststaplers 2 mittels eines nicht näher dargestellten Schubantriebs verschoben werden.

Das Flurförderzeug 1 weist ein Drei-Rad-Fahrwerk auf, mit dem sich das Flurförderzeug 1 auf einer Fahrbahn abstützt. Das Drei-Rad-Fahrwerk besteht aus einem Antriebrad 12, das um eine vertikale Achse lenkbar ist, und zwei Lasträdern 13, die an den Enden von jeweils einem Lastarm 3a des Fahrzeugrahmens 3 angeordnet sind. In der Figur 1 ist nur der in der dargestellten Seitenansicht vorne liegende Lastarm 3a mit dem entsprechenden Lastrad 13 dargestellt. Die beiden Lastarme 3a sind in Fahrzeugquerrichtung voneinander beabstandet, so dass zwischen den beiden Lastarmen 3a das Hubgerüst 10 angeordnet werden kann. Das Antriebsrad 12 ist - in Fahrzeugquerrichtung gesehen - im Wesentlichen mittig zwischen den beiden Lastarmen 3a und somit den beiden Lasträdern 13 angeordnet.

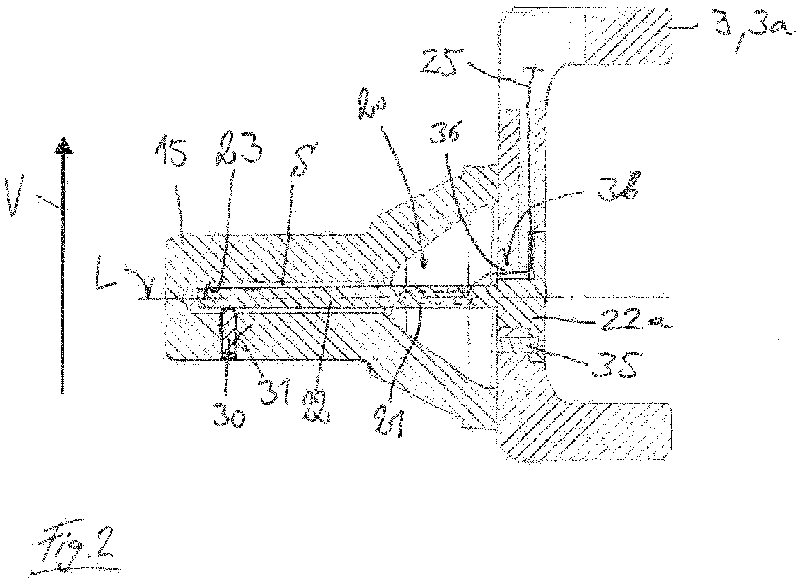

Das Lastrad 13 ist jeweils - wie in der Figur 2 näher dargestellt ist - auf einem Lagerzapfen 15 drehbar gelagert ist, der an dem Fahrzeugrahmen 3, im dargestellten Ausführungsbeispiel an dem Lastarm 3a des Fahrzeugrahmens 3, des Flurförderzeugs 1 befestigt ist. Der Lagerzapfen 15 bildet hierbei einen Achsschenkel, auf dem das Lastrad 13 drehbar gelagert ist.

Im dargestellten Ausführungsbeispiel ist der Lagerzapfen 15 einseitig an dem Lastarm 3a befestigt, mit dem in der Figur 2 dargestellten rechten Ende. Die Befestigung des Lagerzapfens 15 an dem Lastarm 3a erfolgt durch eine Schweißverbindung, so dass der Lagerzapfen 15 an dem Lastarm 3a angeschweißt ist.

Bei dem erfindungsgemäßen Flurförderzeug 1 ist eine Sensoreinrichtung 20 vorgesehen, die die Radlast des an dem Lagerzapfen 15 drehbar angeordneten Lastrades 13 erfasst.

Die Sensoreinrichtung 20 umfasst erfindungsgemäß einen Sensor 21, der die Verformung eines elastischen Messelements 22 erfasst. Das elastische Messelement 22 ist in einer Ausnehmung 23 des Lagerzapfens 15 angeordnet und der Sensor 21 ist an dem elastischen Messelement 22 angeordnet.

Das elastische Messelement 22 ist - wie in der Figur 2 näher dargestellt ist - an einem ersten Ende, nämlich dem in der Figur 2 rechten Ende, an dem Lastarm 3a und somit dem Fahrzeugrahmen 3 des Flurförderzeugs 1 befestigt und im Bereich des zweiten Endes, nämlich dem in der Figur 2 linken Ende, an dem Lagerzapfen 15 abgestützt.

Die Ausnehmung 23 des Lagerzapfens 15, in der das elastische Messelement 22 angeordnet ist, ist als Längsausnehmung des Lagerzapfens 15 ausgebildet. Die Ausnehmung 23 des Lagerzapfens 15 ist konzentrisch zur Längsachse L des Lagerzapfens 15 angeordnet, die gleichzeitig die Drehachse des Lastrades 13 bildet.

Die Ausnehmung 23 weist einen Durchmesser auf, der größer als der Durchmesser des elastischen Messelements 22 ist, so dass zwischen dem elastischen Messelement 22 und der Ausnehmung 23 ein Ringspalt S ausgebildet ist.

Zur Abstützung des elastischen Messelements 22 mit dem zweiten Ende an dem Lagerzapfen 15 ist ein Auflagerbolzen 30 vorgesehen, der an dem Lagerzapfen 15 befestigt ist. Der Auflagerbolzen 30 ist hierzu in einer Bohrung 31 des Lagerzapfens 15 befestigt, die senkrecht zur Ausnehmung 23 angeordnet ist. Der Auflagerbolzen 30 kann beispielsweise als Schraube, beispielsweise Madenschraube, ausgebildet sein, der in die Bohrung 31 eingeschraubt ist. Die Abstützung des elastischen Messelements 22 mit dem zweiten Ende an dem Lagerzapfen 15 erfolgt in der durch die Linie A-A der Figur 1 verdeutlichte Vertikalebene. Das elastische Messelement 22 stützt sich hierbei mit der Unterseite auf dem Auflagerbolzen 30 ab.

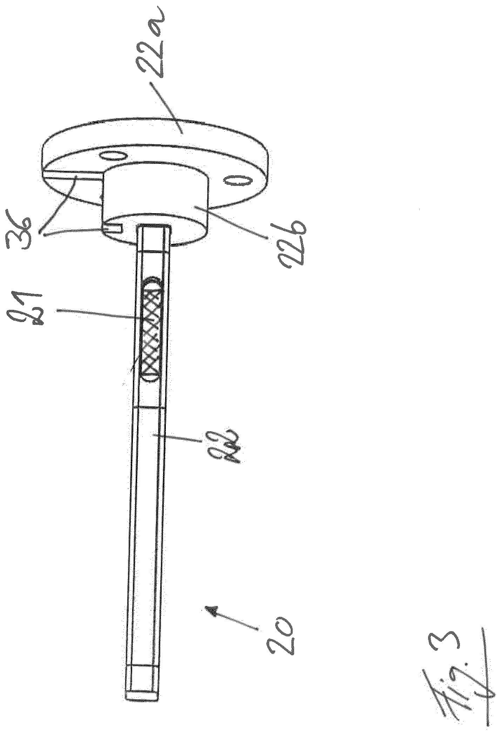

An dem ersten, in der Figur 2 rechten, Ende ist das elastische Messelement 22 zur Befestigung an dem Lastarm 3a mit einem Befestigungsflansch 22a versehen, der in der Figur 3 näher dargestellt ist. Im dargestellten Ausführungsbeispiel ist der Befestigungsflansch 22a und somit das elastische Messelement 22 mittels mehrerer Befestigungsschrauben 35 an dem Lastarm 3a befestigt. Der Befestigungsflansch 22a umfasst einen Zentrierabsatz 22b, der in einer korrelierenden Bohrung 3b des Lastarms 3a angeordnet werden kann.

Das elastische Messelement 22 ist somit als Biegebalken bzw. Federelement ausgebildet ist, das an dem ersten Ende an dem Lastarm 3a fest eingespannt ist und mit dem zweiten Ende über den Auflagerbolzen 30 an dem Lagerzapfen 15 abgestützt ist und steht somit an dem zweiten Ende über den Auflagerbolzen 30 mit dem Lagerzapfen 15 in Verbindung.

Der Sensor 21 ist als Dehnungsmessstreifen ausgebildet, der an dem elastischen Messelement 22 angeordnet ist.

Der Sensor 21 kann derart an dem elastischen Messelement 22 angeordnet sein, dass eine Schubmessung und/oder eine Biegemessung an dem elastischen Messelement 22 durchgeführt wird. In den Figuren 2 und 3 ist der Sensor 21 an einer Seitenfläche des elastischen Messelements 22 angeordnet, so dass eine Schubmessung an dem elastischen Messelement 22 durchgeführt wird. Alternativ oder zusätzlich kann der Sensor 21 an der Oberseite und/oder der Unterseite des elastischen Messelements 22 angeordnet werden, um eine Biegemessung an dem elastischen Messelement 22 durchzuführen.

Das elastische Messelement 22 ist im dargestellten Ausführungsbeispiel im Bereich des Befestigungsflansches 22a mit einer nutartigen Ausnehmung 36 versehen, in die ein mit dem Sensor 21 in Verbindung stehendes elektrisches Kabel 25 zu dem Lastarm 3a geführt werden kann.

Durch die Anordnung des Sensors 21 an dem elastischen Messelement 22 kann der Lagerzapfen 15 des Lastrades 15 und das mit dem Sensor 21 versehene elastische Messelement 22 getrennt voneinander gefertigt werden.

Bei dem erfindungsgemäßen Flurförderzeug 1 wird zuerst der Lagerzapfen 15 des Lastrades 13 an dem Fahrzeugrahmen 3 angeschweißt und anschließend das mit dem Sensor 21 versehene elastische Messelement 22 an dem Fahrzeugrahmen 3 und dem Lagerzapfen 15 angebracht und befestigt. Bei dem erfindungsgemäßen Flurförderzeug 1 ist somit der Sensor 21 an dem elastischen Messelement 22 angebracht, welches erst nach dem Schweißvorgang des Lagerzapfens 15 des Lastrades 13 an dem Fahrzeugrahmen 3 sowie dem Lagerzapfen 15 angebracht und befestigt wird. Der Sensor 21 ist somit nicht den beim Anschweißen des Lagerzapfens 15 an dem Fahrzeugrahmen 3 auftretenden hohen Temperaturen ausgesetzt.

Durch die Anordnung des elastischen Messelements 22 in der Ausnehmung 23 des Lagerzapfens ist das mit dem Sensor 21 versehene elastische Messelement 22 in den Lagerzapfen 15 integral eingebaut, so dass der Sensor 21 vor Beschädigungen geschützt ist und eine platzsparende Anordnung des Sensors 21 erzielt wird.

In Abhängigkeit von der an dem Lastrad 15 auftretenden Radlast verformt sich der Lagerzapfen 15 mit dem freien Ende, d.h. dem in der Figur 2 linken Ende, in vertikaler Richtung V nach oben. Diese Verformung des Lagerzapfens 15 wird über den Auflagerbolzen 30 auf das elastische Messelement 22 übertragen, das sich somit ebenfalls in Abhängigkeit von der an dem Lastrad 15 auftretenden Radlast verformt. Die dabei auftretende Verformung bzw. Kräfte können mit dem Sensor 21 erfasst werden und hieraus die Radlast an dem Lastrad 13 bestimmt werden. Mit dem Sensor 21 an dem elastischen Messelement 22 kann somit die Radlast des Lastrades 13 direkt an dem Lagerzapfen 15 des Lastrades 13 erfasst und gemessen werden.

## Patentansprüche

1. Flurförderzeug (1) mit mindestens einem Lastrad (13), mit der sich das Flurförderzeug (1) auf einer Fahrbahn abstützt, wobei das Lastrad (13) auf einem Lagerzapfen (15) drehbar gelagert ist, der an einem Fahrzeugrahmen (3) des Flurförderzeugs (1) befestigt ist, wobei eine Sensoreinrichtung (20) zur Radlastmessung des Lastrades (13) vorgesehen ist, **dadurch gekennzeichnet, dass** die Sensoreinrichtung (20) einen Sensor (21) zur Erfassung der Verformung eines elastischen Messelements (22) umfasst, wobei das elastische Messelement (22) in einer Ausnehmung (23) des Lagerzapfens (15) angeordnet ist und der Sensor (21) an dem elastischen Messelement (22) angeordnet ist.

2. Flurförderzeug nach Anspruch 1, **dadurch gekennzeichnet, dass** das elastische Messelement (22) an einem ersten Ende an dem Fahrzeugrahmen (3) des Flurförderzeugs (1) befestigt ist und im Bereich des zweiten Endes an dem Lagerzapfen (15) abgestützt ist.

3. Flurförderzeug nach Anspruch 1 oder 2, **dadurch gekennzeichnet, dass** die Ausnehmung (23) des Lagerzapfens (15) als Längsausnehmung des Lagerzapfens (15) ausgebildet ist, in der das elastische Messelement (22) angeordnet ist.

4. Flurförderzeug nach Anspruch 2 oder 3, **dadurch gekennzeichnet, dass** zur Abstützung des elastischen Messelements (22) an dem Lagerzapfen (15) ein Auflagerbolzen (30) vorgesehen ist, der an dem Lagerzapfen (15) befestigt ist.

5. Flurförderzeug nach einem der Ansprüche 2 bis 4, **dadurch gekennzeichnet, dass** zur Befestigung des elastischen Messelements (22) an dem Fahrzeugrahmen (3) das elastische Messelement (22) mit einem Befestigungsflansch (22a) versehen ist.

6. Flurförderzeug nach einem der Ansprüche 1 bis 5, **dadurch gekennzeichnet, dass** das elastische Messelement (22) als Biegebalken ausgebildet ist.

7. Flurförderzeug nach einem der Ansprüche 1 bis 6, **dadurch gekennzeichnet, dass** der Sensor (21) als Dehnungsmessstreifen ausgebildet ist.

8. Flurförderzeug nach einem der Ansprüche 1 bis 7, **dadurch gekennzeichnet, dass** der Sensor (21) eine Schubmessung und/oder eine Biegemessung des elastischen Messelements (22) durchführt.

9. Flurförderzeug nach einem der Ansprüche 1 bis 8, **dadurch gekennzeichnet, dass** der Lagerzapfen (15) des Lastrades (13) an dem Fahrzeugrahmen (3) angeschweißt wird und das mit dem Sensor (21) versehene elastische Messelement (22) nach dem Schweißvorgang des Lagerzapfens (15) an dem Fahrzeugrahmen (3) an dem Lagerzapfen (15) angebracht wird.

10. Flurförderzeug nach einem der Ansprüche 1 bis 9, **dadurch gekennzeichnet, dass** das Flurförderzeug (1) als Schubmaststapler (2) ausgebildet ist.
